# EUROPÄISCHE PATENTANMELDUNG

(11) **EP 1 319 815 A2**
(43) Veröffentlichungstag der Anmeldung: **18.06.2003**
(21) Anmeldenummer: 02026570.8
(22) Anmeldetag: 28.11.2002
(51) Int. Cl.: F01P 7/16, F01P 3/20

(54) **Kühlkreislauf einer flüssigkeitsgekühlten Brennkraftmaschine**

(30) Priorität: 15.12.2001 DE 10161851
(71) Anmelder: DaimlerChrysler AG, 70567 Stuttgart (DE)
(72) Erfinder: Pfeffinger, Harald, 75233 Tiefenbronn (DE); Sass, Heiko, 71732 Tamm (DE)

(57) **Zusammenfassung**

Die Erfindung betrifft einen Kühlkreislauf (1) einer flüssigkeitsgekühlten Brennkraftmaschine (2a,2b) eines Kraftfahrzeugs mit einer Kühlmittelpumpe (10), einem elektrischen Mischventil (5), einem Kühlwasserkühler (6), einem Heizungswärmetauscher (14), einem Motorölwärmetauscher (16), einem Getriebeölkühler (7), mit einem Wärmestrom vom Getriebeöl zur Umgebungsluft, und einem Getriebeölwärmetauscher (9), mit einem Wärmestrom zwischen Getriebeöl und Kühlwasser, wobei zwischen dem Getriebeölkühler (7) und dem zum Getriebeölkühler parallelgeschalteten Getrieölwärmetauscher (9) ein die Ölstromverteilung regelndes Stellglied (18) angeordnet und im Getriebeölwärmetauscher (9) die Wärmeübertragung mittels des elektrischen Mischventils (5) steuerbar ist.

## Beschreibung

Die Erfindung betrifft einen Kühlkreislauf einer flüssigkeitsgekühlten Brennkraftmaschine mit den Merkmalen des Oberbegriffes des Anspruchs 1.

Aus dem Fachbuch Braess/Seiffert: Vieweg Handbuch Kraftfahrzeugtechnik; 1. Aufl.; Oktober 2000 ist auf der Seite 156 ein für Kraftfahrzeuge üblicher Kühlkreislauf gezeigt, der einen Hauptkreislauf mit einer Brennkraftmaschine, einem Mischventil (Thermostat), einem Kühler und einer Kühlmittelpumpe zeigt. Das Kühlmittel wird von der Kühlmittelpumpe in die Brennkraftmaschine gepumpt, nimmt dort Wärme auf, wird am Thermostat bei kaltem Kühlmittel zurück zur Brennkraftmaschine oder bei warmem Kühlmittel über den Kühler zur Wärmeabgabe geführt. Danach strömt das Kühlmittel zur Brennkraftmaschine zurück. Die Lage des Thermostats im Kreislauf ist vor oder nach dem Kühler. Daneben gibt es noch einen oder mehrere Nebenkreisläufe mit einem Heizungswärmetauscher für die Fahrzeuginnenraumheizung, einem Öl-Wasser-Wärmetauscher für die Erwärmung des Motoröls der Brennkraftmaschine bei kalten Betriebszuständen, bzw. Kühlung des Motoröls bei heißen Betriebszuständen. Außerdem kann der Nebenkreislauf noch einen Wärmetauscher für das Getriebeöl, einen Kühler für die Abgasrückführung und unter Umständen noch einen Ladeluftkühler aufweisen. Außerdem ist bekannt, das Mischventil (Thermostat) elektrisch anzusteuern.

Aufgabe der Erfindung ist es, den Kühlkreislauf einer Brennkraftmaschine mit einem Getriebe eines Kraftfahrzeugs so anzuordnen, dass der Kraftstoffverbrauch und die Abgasemission des Kraftfahrzeugs beim Betrieb, insbesondere in der Warmlaufphase, verringert werden.

Diese Aufgabe wird durch einen Kühlkreislauf mit den Merkmalen des Anspruches 1 gelöst.

Der erfindungsgemäße Kühlkreislauf einer flüssigkeitsgekühlten Brennkraftmaschine eines Kraftfahrzeugs weist neben dem Kühlwasserteil des Kreislaufes mit einer Kühlmittelpumpe, einem elektrischen Mischventil, einem Kühlwasserkühler, einem Getriebeölkühler, mehreren Wärmtauschern für die Heizung, das Motoröl und das Getriebeöl ein Stellglied auf, das die Ölstromverteilung zwischen dem Getriebeölkühler und dem dazu parallelgeschalteten Getriebeölwärmetauscher regelt. Mittels dieses Stellgliedes wird der Ölstrom des Getriebes abhängig von der Menge und der Richtung des Wärmestromes im Öl verteilt. Bei kaltem Getriebeöl wird der Ölstrom gänzlich zum Getriebeölwärmetauscher geleitet, damit das Getriebeöl vom Motorkühlwasser erwärmt wird. Durch ein schnelles Erwärmen des Getriebeöls wird die Reibung im Getriebe und damit der Gesamtverbrauch des Kraftfahrzeuges verringert. Bei heißem Getriebeöl wird durch Umschalten des Stellgliedes das Getriebeöl zum Getriebeölkühler geleitet um die Wärme an die Umgebung abzugeben und ein Überhitzen des Öls zu verhindern. In dem Falle, dass das Getriebeöl heißer als das Motoröl ist, was z.B. bei langen Bergabfahrten eintreten kann, wird durch das Stellglied der Getriebeölstrom zum Getriebeölwärmetauscher geleitet, um damit das Motoröl zu temperieren.

Außerdem ist die Wärmeübertragung im Getriebeölwärmetauscher dadurch steuerbar, dass mittels des elektrischen Mischventils der Kühlwasserstrom durch den Getriebeölwärmetauscher steuerbar ist. Durch Steuern des Kühlwasserstromes durch den Getriebeölwärmetauscher ist eine bessere Anpassung der Wärmeübertragung vom Getriebeöl zum Kühlwasser oder umgekehrt möglich, weil durch Einstellen von unterschiedlichen Kühlwassermengenströmen bei ungefähr konstantem Getriebeölmengestrom ein bedarfsgerechter Wärmeübergang zum Kühlwasser einstellbar ist, ohne Wärme über den Getriebeölkühler an die Umgebung abzuführen.

In Ausgestaltung der Erfindung (Anspruch 2) wird das Stellglied anhängig von verschiedenen Betriebsparametern geregelt, wie zum Beispiel Umgebungstemperatur, Kühlwassertemperatur, Fahrgeschwindigkeit oder Motordrehzahl. Dadurch ist es möglich, den Wärmeübergang bedarfsgerecht zu regeln

In weiterer Ausgestaltung der Erfindung (Anspruch 3) wird das Stellglied abhängig von der Temperatur des Getriebeöls geregelt. Ein einfaches Regeln des Stellglieds abhängig nur von der Temperatur lässt sich zum Beispiel mittels eines temperaturabhängigen Dehnstoffreglers darstellen. Dies ist eine einfache und kostengünstige Möglichkeit, das Stellglied zur Getriebeölverteilung zu realisieren.

In weiterer vorteilhafter Ausgestaltung der Erfindung (Anspruch 4) ist das Stellglied durch ein Steuergerät regelbar. Wenn mehrere Parameter in die Regelcharakteristik einfließen sollen, ist es von Vorteil, diese durch ein Steuergerät gemeinsam zu regeln. Dadurch ist das Regeln anhand eines parameterabhängigen Kennfeldes möglich, um einen für den Verbrauch und die Emissionen des Kraftfahrzeuges optimalen Wärmeübergang zu ermöglichen.

In weiterer förderlicher Ausgestaltung der Erfindung (Anspruch 5) wird das Stellglied in Strömungsrichtung nach dem Getriebeölkühler und dem Getriebeölwärmetauscher angeordnet. Das Stellglied bildet in diesem Falle die Einmündungsstelle der beiden Teilströme aus dem Getriebeölkühler und dem Getriebeölwärmetauscher in eine gemeinsame Ölrücklaufleitung. Durch eine Anordnung des Stellgliedes nach den wärmeabgebenden oder wärmeaufnehmenden Bauteilen ist eine gute Regelung, eine sogenannte Ausgangsregelung, der Getriebeöltemperatur möglich, da die tatsächliche Temperatur des zurückfließenden Öls eingestellt wird.

Als eine Alternative hierzu (Anspruch 6) wird die Weiterbildung der Erfindung mit dem Stellglied vor der Verzweigung zum Getriebeölkühler und Getriebeölwärmetauscher vorgeschlagen. Diese Ausführung wird als Eingangsregelung bezeichnet und bietet bei etwas weniger guter Regelgüte als die Ausgangsregelung eine Variante, die unter Umständen aus Bauraumerfordernissen (Platzmangel) notwendig ist.

In einer weiteren förderlichen Ausgestaltung der Erfindung (Anspruch 7) ist die Kühlwasserseite des Getriebeölwärmetauschers in Strömungsrichtung gesehen parallel zum Kühlwasserkühler geschaltet. Diese Ausführung bedeutet, dass der Getriebeölwärmetauscher in der sogenannten Kurzschlussleitung zwischen dem elektrischen Mischventil und der Kühlmittelpumpe angeordnet ist. Diese Kurzschlussleitung ist im Kühlwasserkreislauf bereits vorhanden, und deshalb ist kein zusätzlicher Bauaufwand notwendig. Durch das elektrische Mischventil ist zusätzlich zum Ölstrom der Kühlwasserstrom im Getriebeölwärmetauscher regelbar. Bei dieser Anordnung ist es möglich, zum Beispiel in der Warmlaufphase den gesamten Kühlwasserstrom durch den Getriebeölwärmetauscher zu leiten, um dadurch ein schnelles Aufheizen des Getriebeöl zu ermöglichen.

In einer weiteren Alternative zum vorherigen Ausgestaltung (Anspruch 8) der Erfindung ist die Kühlwasserseite des Getriebeölwärmetauschers in einem Nebenkreislauf mit dem Heizungswärmetauscher in Reihe geschaltet. Ein Motorölwärmetauscher kann zum Getriebeölwärmetauscher parallel oder in Reihe geschaltet sein. Mittels dieser Anordnung kann auch bei gänzlich geschlossenem Kurzschlusskreislauf in der Startphase der Brennkraftmaschine das Getriebeöl zumindest teilweise angewärmt werden. Der Heizkreislauf wird auch in der Kaltstartphase von Kühlwasser - wenn auch unter Umständen nur ganz gering - durchströmt. Dadurch ist ein Wärmeübergang vom angewärmten Kühlwasser an das Motor- und das Getriebeöl möglich, damit die Reibung in der Brennkraftmaschine und im Getriebe durch das angewärmte Öl verringert wird.

Weitere Merkmale und Merkmalskombinationen ergeben sich aus der Beschreibung sowie den Zeichnungen. Konkrete Ausführungsbeispiele der Erfindung sind in den Zeichnungen vereinfacht dargestellt und in der nachfolgenden Beschreibung näher erläutert. Es zeigen:
Fig. 1 ein Kühlkreislaufschema einer Brennkraftmaschine mit einem Getriebeölwärmetauscher, der dem Kühlwasserkühler parallel geschaltet ist,
Fig. 2 ein Kühlkreislaufschema einer Brennkraftmaschine mit einem Getriebeölwärmetauscher, der dem Kühlwasserkühler parallel geschaltet ist und vom Kühlwasser des Heizungskreislaufs durchströmt wird,
Fig. 3 ein Kühlkreislaufschema einer Brennkraftmaschine mit einem Getriebeölwärmetauscher, der im Heizungskreislauf parallel zum Motorölwärmetauscher geschaltet ist und
Fig. 4 ein Kühlkreislaufschema einer Brennkraftmaschine mit einem Getriebeölwärmetauscher, der im Heizungskreislauf hinter dem Motorölwärmetauscher angeordnet ist.

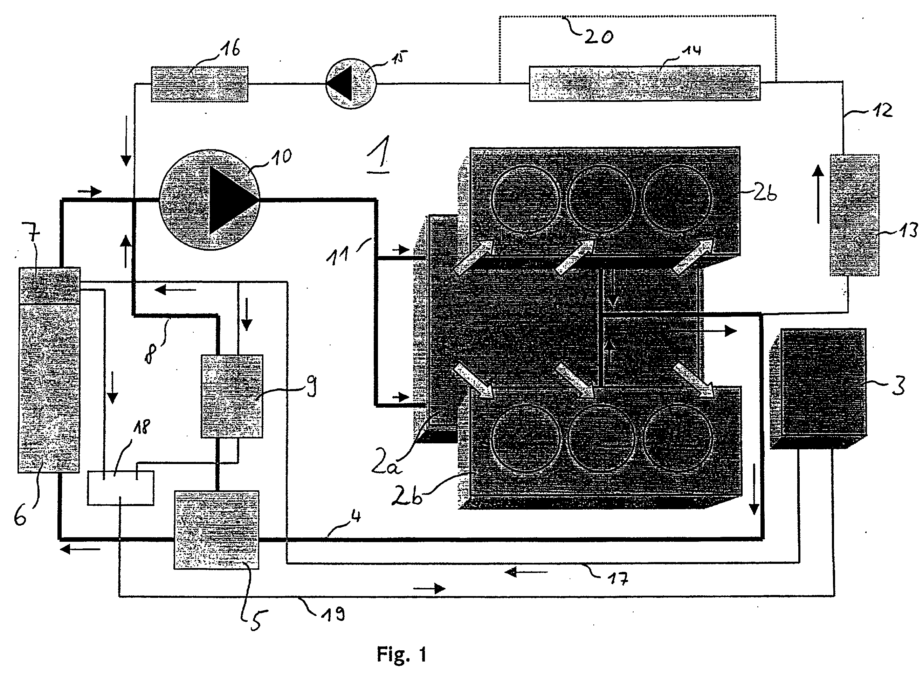

In Figur 1 ist ein Kühlkreislauf 1 einer Brennkraftmaschine 2a, 2b mit einem Getriebe 3 in einem nichtgezeigten Kraftfahrzeug dargestellt. Das Kühlwasser fließt vom Kurbelgehäuse 2a der Brennkraftmaschine über den Zylinderkopf 2b und die Kühlmittelvorlaufleitung 4 zum elektrischen Mischventil 5. Vom elektrischen Mischventil 5 fließt das Kühlwasser abhängig von der Stellung des elektrischen Mischventil entweder über den Wasserkühler 6 und den Getriebeölkühler 7 oder im Kurzschlusskreislauf 8 durch den Getriebeölwärmetauscher 9 zur Wasserpumpe 10. Die Wasserpumpe 10 ist mechanisch oder elektrisch angetrieben und schaltbar ausgeführt. Von dort wird das Kühlwasser durch die Rücklaufleitung 11 zum Kurbelgehäuse 2a gepumpt. Des weiteren besteht der Kühlkreislauf 1 noch aus einem Heizkreislauf 12, der
- im Zylinderkopf 2b oder aus der Kühlmittelvorlaufleitung 4 abzweigt,
- durch einen AGR-Kühler 13 für zurückzuführendes Abgas,
- einen Heizungswärmetauscher 14 für die nicht gezeigte Fahrzeugheizung,
- eine optionale elektrische Zusatzwasserpumpe 15 und
- einen Motorölwärmetauscher 16 zur Wasserpumpe 10 führt.
   Am Heizungswärmetauscher 14 kann eine zuschaltbare Umgehungsleitung 20 angeordnet sein, um bei hohen Außentemperaturen, bei denen keine Fahrgastraumheizung benötigt wird, den Heizungswärmetauscher einfach umgehen zu können.
   Das zu kühlende Getriebeöl fließt über eine Getriebeölvorlaufleitung 17 und verteilt sich sowohl in den Getriebeölkühler 7 und/oder den Getriebeölwärmetauscher 9. Nach Passieren dieser beiden Elemente vereinigen sich die Ölströme im Stellglied 18 und fließen in der Getriebeölrücklaufleitung 19 zum Getriebe 3 zurück.
   Aufgrund der Verstellmöglichkeit des elektrischen Mischventils 5, des Stellglieds 18, der Wasserpumpe 10 und der elektrischen Zusatzwasserpumpe 15 sind abhängig vom Betriebszustand der Brennkraftmaschine 1 und des Getriebes 3 verschiedene Kühlwasser- und Getriebeölströme einstellbar. Es gibt folgende Betriebszustände: Die Brennkraftmaschine 1 und das Getriebe 3 sind kalt, d.h. die Brennkraftmaschine und das Getriebe befinden sich unmittelbar nach dem Kaltstart. In diesem Betriebszustand steht das Kühlwasser oder es fließt nur mit einem geringen Volumenstrom in Bewegung gesetzt durch die Wasserpumpe 10 oder die elektrische Zusatzwasserpumpe 15. Zu Beginn ist das elektrische Mischventil 5 ganz geschlossen und ein Wasserstrom findet nur über den Heizkreislauf 12 statt, falls die elektrische Zusatzpumpe 15 eingeschaltet ist. Wärme aus dem Kühlwasser, die nur in geringem Maße vorhanden ist, wird über den Heizungswärmetauscher 14 an die nicht gezeigte Fahrzeugheizung und über den Motorölwärmetauscher 16 an das Motoröl abgegeben. Das Stellglied 18 steht so, dass der Getriebeölwärmetauscher 9 durchströmt wird. Da durch das geschlossene elektrische Mischventil 5 kein Kühlwasser strömt, findet im Getriebeölwärmetauscher 9 kein Wärmeübergang statt, d.h. es besteht ein Getriebeölkurzschluss und das Öl wird nicht kälter.
   Wenn die Brennkraftmaschine 2a, 2b bereits warm, das Getriebe 3 aber noch kalt ist, ist es für den Gesamtwirkungsgrad des Fahrzeuges von Vorteil, das Getriebeöl schnell mit Abwärme der Brennkraftmaschine aufzuheizen, um die Reibung durch das dünnflüssigere Getriebeöl zu verringern. In diesem Falle wird die Wasserpumpe 10 in Betrieb gesetzt und das elektrische Mischventil 5 öffnet den Kurzschlusskreislauf 8, damit warmes Kühlwasser durch den Getriebeölwärmetauscher 9 strömt. Das elektrische Mischventil 5 wird nur soweit geöffnet, dass durch den Heizkreislauf 12 noch genügend Kühlwasser strömt, um den Heizungswärmetauscher 14 und den Motorölwärmetauscher 16 mit Wärme zu versorgen, das restliche Kühlwasser strömt durch den Kurzschlusskreislauf 8. Das Stellglied 9 ist so gestellt, dass das Getriebeöl durch den Getriebeölwärmetauscher 9 strömt.
   Auf diese Weise werden beim Kaltstart die verschiedenen wärmeaufnehmenden Stellen im Kühlkreislauf entsprechend ihres Wärmebedarfs, aber auch entsprechend ihrer Priorität mit Wärme versorgt. Zum Beispiel werden die Brennkraftmaschine aus Funktionsgründen und die Fahrzeugheizung aus Komfortgründen bevorzugt mit Wärme versorgt gegenüber dem Getriebe, das im Kaltstart kurzzeitig mit höherer Reibung aufgrund des kälteren Öls betrieben wird. Ab dem Zeitpunkt, ab dem das Motoröl schon warm , das Getriebeöl jedoch noch kalt ist, wird der Kühlwasserstrom durch den Getriebeölwärmetauscher 9 mittels des elektrischen Mischventils 5 vergrößert, und damit der Wärmetransport zum Getriebeöl vergrößert.
   Bei steigender Kühlwassertemperatur öffnet das elektrische Mischventil 5 den Kühlkreislauf über den Wasserkühler 6, um das Kühlwasser nicht zu heiß werden zu lassen, jedoch bleibt der Kurzschlusskreislauf 8 durch den Getriebeölwärmetauscher 9 weiterhin zumindest teilweise offen, um einen Wärmetransport ins Getriebeöl zu ermöglichen.
   Bei oder kurz vor Erreichen der zulässigen Höchsttemperatur des Getriebeöls schaltet das Stellglied 18 um, das Getriebeöl fließt durch den Getriebeölkühler 7 und wird dort abgekühlt. Das elektrische Mischventil 5 leitet alles Kühlwasser zum Wasserkühler 6.
   In dem Fall, dass das Motoröl abkühlt und das Getriebeöl weiter im Bereich der zulässigen Höchsttemperatur liegt (bei längeren Bergabfahrten im Schubbetrieb kühlt die Brennkraftmaschine 2a, 2b aus, das Getriebe 3 heizt sich auf) ist es sinnvoll, das Motoröl mittels des Getriebeölwärmetauschers 9 durch das Getriebeöl aufzuheizen. Dazu leitet das elektrische Mischventil 5 das Kühlwasser im Kurzschlusskreislauf 8 durch den Getriebeölwärmetauscher 9, der seinerseits aufgrund der entsprechenden Stellung des Stellgliedes 18 von heißem Getriebeöl durchströmt wird. In diesem Falle ist es erforderlich, das Stellglied 18 elektrisch von einem nicht gezeigten Steuergerät aus anzusteuern. In den anderen Betriebszuständen reicht für das Stellglied 18 eine Ausführung als Thermostat aus, der nur auf die Getriebeöltemperatur reagiert. D.h. eine optimale Kühlkreislaufsteuerung wird mit einem elektrisch angesteuerten Stellglied 18 ausgerüstet, für eine etwas einfachere, kostengünstigere Ausführung wird ein Thermostat als Stellglied 18 verwendet.

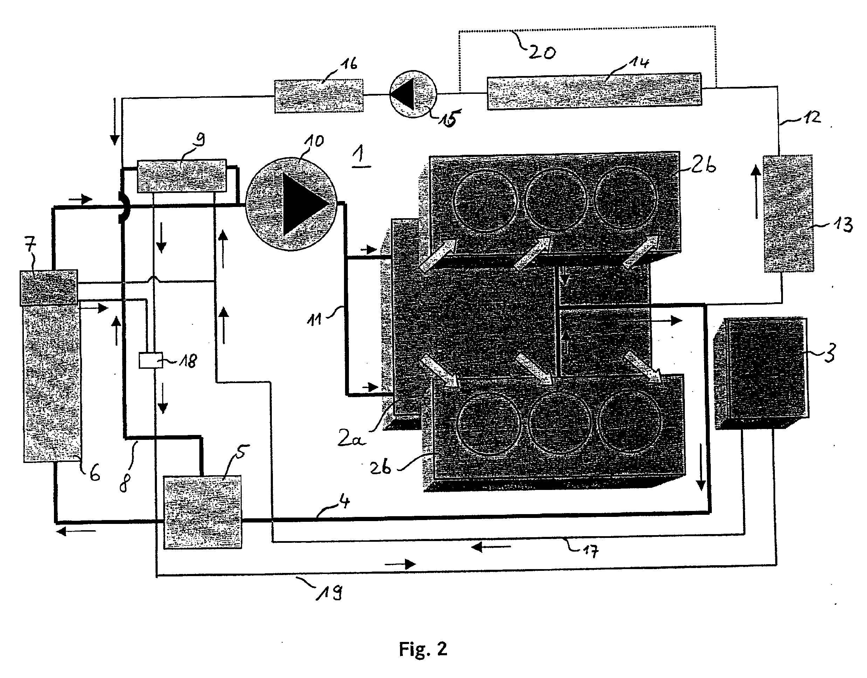

   In Figur 2 ist ein Kühlkreislauf 1 einer Brennkraftmaschine 2a, 2b mit einem Getriebe 3 in einem nichtgezeigten Kraftfahrzeug dargestellt. Das Kühlwasser fließt vom Kurbelgehäuse 2a der Brennkraftmaschine über den Zylinderkopf 2b und die Kühlmittelvorlaufleitung 4 zum elektrischen Mischventil 5. Vom elektrischen Mischventil 5 fließt das Kühlwasser abhängig von der Stellung des elektrischen Mischventil entweder über den Wasserkühler 6 und den Getriebeölkühler 7 oder im Kurzschlusskreislauf 8 durch den Getriebeölwärmetauscher 9 zur Wasserpumpe 10. Die Wasserpumpe 10 ist mechanisch oder elektrisch angetrieben und schaltbar ausgeführt. Von dort wird das Kühlwasser durch die Rücklaufleitung 11 zum Kurbelgehäuse 2a gepumpt. Des weiteren besteht der Kühlkreislauf 1 noch aus einem Heizkreislauf 12, der
- im Zylinderkopf 2b oder aus der Kühlmittelvorlaufleitung 4 abzweigt,
- durch einen AGR-Kühler 13 für zurückzuführendes Abgas,
- einen Heizungswärmetauscher 14 für die nicht gezeigte Fahrzeugheizung,
- eine optionale elektrische Zusatzwasserpumpe 15 und
- einen Motorölwärmetauscher 16 zu einer Einmündung in den Kurzschlusskreislauf 8 unmittelbar vor dem Getriebeölwärmetauscher 9 führt.

Am Heizungswärmetauscher 14 kann eine zuschaltbare Umgehungsleitung 20 angeordnet sein, um bei hohen Außentemperaturen, bei denen keine Fahrgastraumheizung benötigt wird, den Heizungswärmetauscher einfach umgehen zu können.

Das zu kühlende Getriebeöl fließt über eine Getriebeölvorlaufleitung 17 und verteilt sich sowohl in den Getriebeölkühler 7 und/oder den Getriebeölwärmetauscher 9. Nach Passieren dieser beiden Elemente vereinigen sich die Ölströme im Stellglied 18 und fließen in der Getriebeölrücklaufleitung 19 zum Getriebe 3 zurück.

Aufgrund der Verstellmöglichkeit des elektrischen Mischventils 5, des Stellglieds 18, der Wasserpumpe 10 und der elektrischen Zusatzwasserpumpe 15 sind abhängig vom Betriebszustand der Brennkraftmaschine 1 und des Getriebes 3 verschiedene Kühlwasser- und Getriebeölströme einstellbar. Es gibt folgende Betriebszustände: Die Brennkraftmaschine 1 und das Getriebe 3 sind kalt, d.h. die Brennkraftmaschine und das Getriebe befinden sich unmittelbar nach dem Kaltstart. In diesem Betriebszustand steht das Kühlwasser oder es fließt nur mit einem geringen Volumenstrom durch die Wasserpumpe 10 oder die elektrische Zusatzwasserpumpe 15 in Bewegung gesetzt. Zu Beginn ist das elektrische Mischventil 5 ganz geschlossen und ein Wasserstrom findet nur über den Heizkreislauf 12 statt, falls die elektrische Zusatzpumpe 15 eingeschaltet ist. Wärme aus dem Kühlwasser, die nur in geringem Maße vorhanden ist, wird über den Heizungswärmetauscher 14 an die nicht gezeigte Fahrzeugheizung und über den Motorölwärmetauscher 16 an das Motoröl abgegeben. Das Kühlwasser strömt danach über den Getriebeölwärmetauscher 9 und die Wasserpumpe 10 zur Brennkraftmaschine 2a, 2b zurück. Die Größen bzw. die Wirkungsgrade des Motorölwärmetauschers 16 und des Getriebeölwärmetauschers 9 sind so aufeinander abgestimmt, dass der Getriebeölwärmetauscher erst bei höheren Kühlwasser-Volumenströmen große Wärmemengen überträgt. Dadurch ist ein Aufheizen des Motoröls zeitlich vor dem Getriebeöl gewährleistet.

In den übrigen Betriebsbereichen verhält sich diese Anordnung wie im Kühlkreislauf aus Fig. 1.

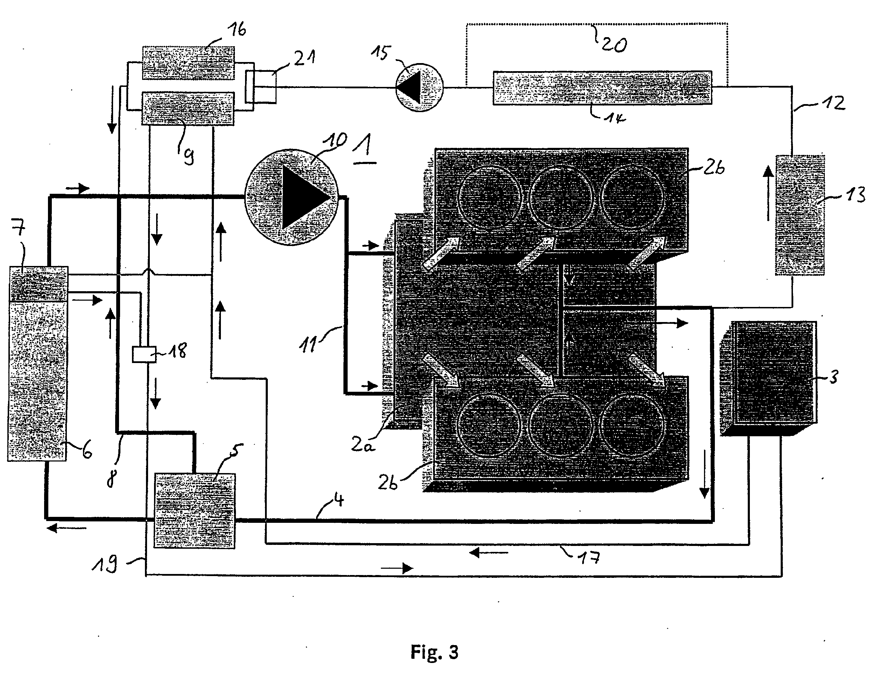

In Figur 3 ist schematisch ein Kühlkreislauf 1 einer Brennkraftmaschine 2a, 2b mit einem Getriebe 3 in einem nichtgezeigten Kraftfahrzeug dargestellt. Das Kühlwasser fließt vom Kurbelgehäuse 2a der Brennkraftmaschine über den Zylinderkopf 2b und die Kühlmittelvorlaufleitung 4 zum elektrischen Mischventil 5. Vom elektrischen Mischventil 5 fließt das Kühlwasser abhängig von der Stellung des elektrischen Mischventil entweder über den Wasserkühler 6 und den Getriebeölkühler 7 oder im Kurzschlusskreislauf 8 zur Wasserpumpe 10. Die Wasserpumpe 10 ist mechanisch oder elektrisch angetrieben und schaltbar ausgeführt. Von dort wird das Kühlwasser durch die Rücklaufleitung 11 zum Kurbelgehäuse 2a gepumpt. Des weiteren besteht der Kühlkreislauf 1 noch aus einem Heizkreislauf 12, der
- im Zylinderkopf 2b oder aus der Kühlmittelvorlaufleitung 4 abzweigt,
- durch einen AGR-Kühler 13 für zurückzuführendes Abgas,
- einen Heizungswärmetauscher 14 für die nicht gezeigte Fahrzeugheizung,
- eine optionale elektrische Zusatzwasserpumpe 15 und
- einem Getriebeölwärmetauscher 9 mit einem dazu parallelgeschalteten Motorölwärmetauscher 16 zu einer Einmündung unmittelbar vor der Wasserpumpe 10 führt.

Die Abstimmung des Getriebeölwärmetauschers 9 und des Motorölwärmetauschers 16 in Bezug auf die Wärmeübertragung zwischen Motor- und Getriebeöl einerseits und Kühlwasser andererseits erfolgt durch ihre Größe bzw. Wirkungsgrade oder durch ein zusätzliches Stellglied 21, das die Kühlwasserverteilung im Heizkreislauf zwischen den beiden Wärmetauschern regelt, wobei bevorzugt die Motoröltemperatur bei Kaltstart durch Wärmeaufnahme aus dem Kühlwasser erhöht wird.

Am Heizungswärmetauscher 14 kann eine zuschaltbare Umgehungsleitung 20 angeordnet sein, um bei hohen Außentemperaturen, bei denen keine Fahrgastraumheizung benötigt wird, den Heizungswärmetauscher einfach umgehen zu können.

Das zu kühlende Getriebeöl fließt über eine Getriebeölvorlaufleitung 17 und verteilt sich sowohl in den Getriebeölkühler 7 und/oder den Getriebeölwärmetauscher 9. Nach Passieren dieser beiden Elemente vereinigen sich die Ölströme im Stellglied 18 und fließen in der Getriebeölrücklaufleitung 19 zum Getriebe 3 zurück.

Aufgrund der Verstellmöglichkeit des elektrischen Mischventils 5, des Stellglieds 18, der Wasserpumpe 10 und der elektrischen Zusatzwasserpumpe 15 sind abhängig vom Betriebszustand der Brennkraftmaschine 1 und des Getriebes 3 verschiedene Kühlwasser- und Getriebeölströme einstellbar. Es gibt folgende Betriebszustände: Die Brennkraftmaschine 1 und das Getriebe 3 sind kalt, d.h. die Brennkraftmaschine und das Getriebe befinden sich unmittelbar nach dem Kaltstart. In diesem Betriebszustand steht das Kühlwasser oder es fließt nur mit einem geringen Volumenstrom durch die Wasserpumpe 10 oder die elektrische Zusatzwasserpumpe 15 in Bewegung gesetzt. Zu Beginn ist das elektrische Mischventil 5 ganz geschlossen und ein Wasserstrom findet nur über den Heizkreislauf 12 statt, falls die elektrische Zusatzpumpe 15 eingeschaltet ist. Wärme aus dem Kühlwasser, die nur in geringem Maße vorhanden ist, wird über den Heizungswärmetauscher 14 an die nicht gezeigte Fahrzeugheizung und über den Motorölwärmetauscher 16 an das Motoröl abgegeben. Mit steigender Kühlwassertemperatur wird der zum Motorölwärmetauscher 16 parallelgeschaltete Getriebeölwärmetauscher 9 zugeschaltet, bzw. aufgrund des Wirkungsgradverhältnisses wird bei höheren Kühlwassertemperaturen Wärme an das Getriebeöl abgegeben. Dadurch ist ein Aufheizen des Motoröls zeitlich vor dem Getriebeöl gewährleistet.

Bei weiterem Aufheizen des Kühlwassers öffnet das elektrische Mischventil 5 zuerst den Kurzschlusskreislauf 8, bei weiterem Aufheizen den Zulauf zum Wasserkühler 6. Dies geschieht jedoch in so geringen Maßen, dass im Heizkreislauf 12 weiterhin eine große Kühlwassermenge und damit eine große Wärmemenge durch den Motorölwärmetauscher 16 und den Getriebeölwärmetauscher 9 gepumpt wird.

In den übrigen Betriebsbereichen verhält sich diese Anordnung gleich wie der Kühlkreislauf aus Fig. 1 und 2, d.h. alle Stellelemente und Schaltmöglichkeiten sind so gesteuert, dass zuerst das Motoröl, danach die Fahrzeugheizung und das Getriebeöl in dieser Reihenfolge erwärmt werden. Bei einer anderen Priorität des Herstellers bezüglich Komfort oder bei einer anderen Gesetzeslage bezüglich der Emissionen beim Kaltstart ist natürlich auch eine andere Reihenfolge der Aufheizung darstellbar. Bei betriebswarmem Fahrzeug ist der gesamte Kühlkreislauf 1 so geschaltet, dass sich das Kühlwasser, das Motoröl und das Getriebeöl in ihrer jeweils besten Betriebstemperatur befinden.

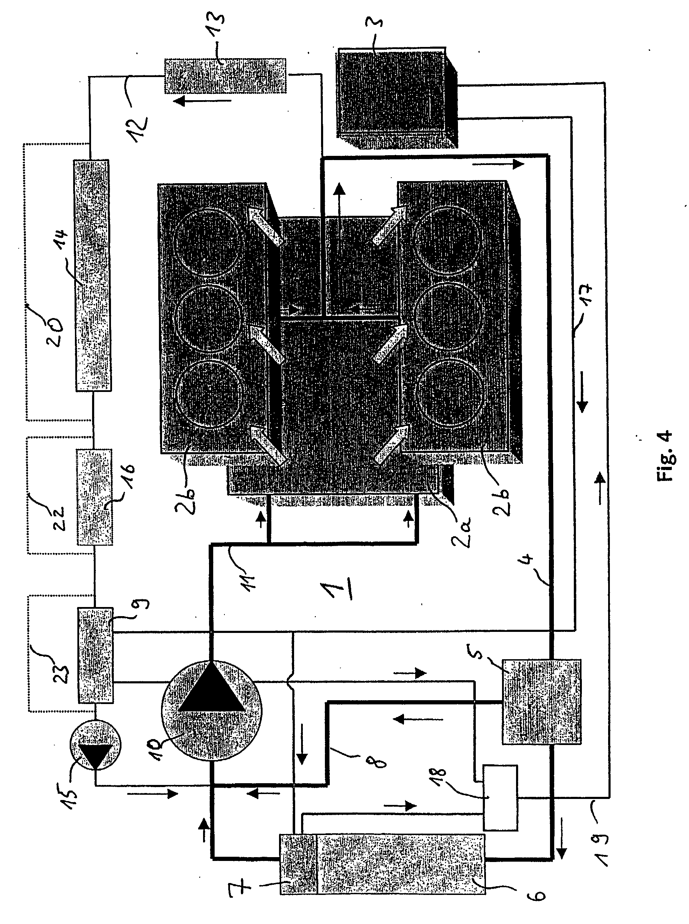

In Figur 4 ist schematisch ein Kühlkreislauf 1 einer Brennkraftmaschine 2a, 2b mit einem Getriebe 3 in einem nichtgezeigten Kraftfahrzeug dargestellt. Das Kühlwasser fließt vom Kurbelgehäuse 2a der Brennkraftmaschine über den Zylinderkopf 2b und die Kühlmittelvorlaufleitung 4 zum elektrischen Mischventil 5. Vom elektrischen Mischventil 5 fließt das Kühlwasser abhängig von der Stellung des elektrischen Mischventil entweder über den Wasserkühler 6 und den Getriebeölkühler 7 oder im Kurzschlusskreislauf 8 zur Wasserpumpe 10. Die Wasserpumpe 10 ist mechanisch oder elektrisch angetrieben und schaltbar ausgeführt. Von dort wird das Kühlwasser durch die Rücklaufleitung 11 zum Kurbelgehäuse 2a gepumpt. Des weiteren besteht der Kühlkreislauf 1 noch aus einem Heizkreislauf 12, der
- im Zylinderkopf 2b oder aus der Kühlmittelvorlaufleitung 4 abzweigt,
- durch einen AGR-Kühler 13 für zurückzuführendes Abgas,
- einen Heizungswärmetauscher 14 für die nicht gezeigte Fahrzeugheizung,
- eine optionale elektrische Zusatzwasserpumpe 15 und
- einem Motorölwärmetauscher 16 mit einem dazu in Reihe geschalteten Getriebeölwärmetauscher 9 zu einer Einmündung unmittelbar vor der Wasserpumpe 10 führt.

Die Abstimmung des Getriebeölwärmetauschers 9 und des Motorölwärmetauschers 16 in Bezug auf die Wärmeübertragung zwischen Motor- und Getriebeöl einerseits und Kühlwasser andererseits erfolgt durch ihre Größe, bzw. Wirkungsgrade, wobei bevorzugt die Motoröltemperatur bei Kaltstart durch Wärmeaufnahme aus dem Kühlwasser erhöht wird.

Am Heizungswärmetauscher 14 kann eine zuschaltbare Umgehungsleitung 20 angeordnet sein, um bei hohen Außentemperaturen, bei denen keine Fahrgastraumheizung benötigt wird, den Heizungswärmetauscher einfach umgehen zu können.

Des weiteren können zur Umgehung des Motorölwärmetauschers 16 und des Getriebeölwärmetauschers 9 zwei Umgehungsleitungen 22, 23 zuschaltbar angeordnet werden. Diese werden zugeschaltet, wenn bei warmem Kühlwasser, Motor- und Getriebeöl kein Wärmetransport zwischen den Medien erforderlich ist und man die Verschlechterung des Strömungswiderstandes im Kühlwasserkreislauf 1,12 innerhalb der Wärmetauscher 9, 16 aufgrund deren internen Strömungswiderstandes vermeiden will.

Das zu kühlende Getriebeöl fließt über eine Getriebeölvorlaufleitung 17 und verteilt sich sowohl in den Getriebeölkühler 7 und/oder den Getriebeölwärmetauscher 9. Nach Passieren dieser beiden Elemente vereinigen sich die Ölströme im Stellglied 18 und fließen in der Getriebeölrücklaufleitung 19 zum Getriebe 3 zurück.

Aufgrund der Verstellmöglichkeit des elektrischen Mischventils 5, des Stellglieds 18, der Wasserpumpe 10 und der elektrischen Zusatzwasserpumpe 15 sind abhängig vom Betriebszustand der Brennkraftmaschine 1 und des Getriebes 3 verschiedene Kühlwasser- und Getriebeölströme einstellbar. Es gibt folgende Betriebszustände: Die Brennkraftmaschine 1 und das Getriebe 3 sind kalt, d.h. die Brennkraftmaschine und das Getriebe befinden sich unmittelbar nach dem Kaltstart. In diesem Betriebszustand steht das Kühlwasser oder es fließt nur mit einem geringen Volumenstrom durch die Wasserpumpe 10 oder die elektrische Zusatzwasserpumpe 15 in Bewegung gesetzt. Zu Beginn ist das elektrische Mischventil 5 ganz geschlossen und ein Wasserstrom findet nur über den Heizkreislauf 12 statt, falls die elektrische Zusatzpumpe 15 eingeschaltet ist. Wärme aus dem Kühlwasser, die nur in geringem Maße vorhanden ist, wird über den Heizungswärmetauscher 14 an die nicht gezeigte Fahrzeugheizung und über den Motorölwärmetauscher 16 an das Motoröl abgegeben. Mit steigender Kühlwassertemperatur gibt der zum Motorölwärmetauscher 16 in Reihe geschaltete Getriebeölwärmetauscher 9 aufgrund des Wirkungsgradverhältnisses bei höheren Kühlwassertemperaturen Wärme an das Getriebeöl ab. Dadurch ist ein Aufheizen des Motoröls zeitlich vor dem Getriebeöl gewährleistet. In dieser frühen Kaltstartphase ist eine Umgehung des Getriebeölwärmetauschers 9 über die Umgehungsleitung 23 möglich, um das Motorkühlwasser und das Motoröl noch schneller aufzuheizen.

Bei weiterem Aufheizen des Kühlwassers öffnet das elektrische Mischventil 5 zuerst den Kurzschlusskreislauf 8, bei weiterem Aufheizen den Zulauf zum Wasserkühler 6. Dies geschieht jedoch in so geringen Maßen, dass im Heizkreislauf 12 weiterhin eine große Kühlwassermenge und damit eine große Wärmemenge durch den Motorölwärmetauscher 16 und den Getriebeölwärmetauscher 9 gepumpt wird.

In den übrigen Betriebsbereichen verhält sich diese Anordnung gleich wie der Kühlkreislauf aus Fig. 3, d.h. alle Stellelemente und Schaltmöglichkeiten sind so gesteuert, dass zuerst das Motoröl, danach die Fahrzeugheizung und das Getriebeöl in dieser Reihenfolge erwärmt werden. Bei einer anderen Priorität des Herstellers bezüglich Komfort oder bei einer anderen Gesetzeslage bezüglich der Emissionen beim Kaltstart ist natürlich auch eine andere Reihenfolge der Aufheizung darstellbar. Bei betriebswarmem Fahrzeug ist der gesamte Kühlkreislauf 1 so geschaltet, dass sich das Kühlwasser, das Motoröl und das Getriebeöl in ihrer jeweils besten Betriebstemperatur befinden.

## Patentansprüche

1. Kühlkreislauf einer flüssigkeitsgekühlten Brennkraftmaschine eines Kraftfahrzeugs mit einer Kühlmittelpumpe, einem elektrischen Mischventil , einem Kühlwasserkühler, einem Heizungswärmetauscher, einem Motorölwärmetauscher, einem Getriebeölkühler, mit einem Wärmestrom vom Getriebeöl zur Umgebungsluft, und einem Getriebeölwärmetauscher, mit einem Wärmestrom zwischen Getriebeöl und Kühlwasser,
**dadurch gekennzeichnet,**
**dass** zwischen dem Getriebeölkühler (7) und dem zum Getriebeölkühler parallelgeschalteten Getriebeölwärmetauscher (9) ein die Ölstromverteilung regelndes Stellglied (18) angeordnet und im Getriebeölwärmetauscher die Wärmeübertragung mittels des elektrischen Mischventils (5) steuerbar ist.

2. Kühlkreislauf nach Anspruch 1,
**dadurch gekennzeichnet,**
**dass** das Stellglied (18) abhängig von Betriebsparametern regelbar ist.

3. Kühlkreislauf nach einem der Ansprüche 1 oder 2,
**dadurch gekennzeichnet,**
**dass** das Stellglied (18) abhängig von der Temperatur des Getriebeöls regelbar ist.

4. Kühlkreislauf nach einem der Ansprüche 1 bis 3,
**dadurch gekennzeichnet,**
**dass** das Stellglied (18) durch ein Steuergerät regelbar ist.

5. Kühlkreislauf nach einem der Ansprüche 1 bis 4,
**dadurch gekennzeichnet,**
**dass** das Stellglied (18) in Strömungsrichtung nach dem Getriebeölkühler (7) und dem Getriebeölwärmetauscher (9) angeordnet ist.

6. Kühlkreislauf nach einem der Ansprüche 1 bis 4,
**dadurch gekennzeichnet,**
**dass** das Stellglied (18) in Strömungsrichtung vor dem Getriebeölkühler (7) und dem Getriebeölwärmetauscher (9) angeordnet ist.

7. Kühlkreislauf nach einem der Ansprüche 1 bis 6,
**dadurch gekennzeichnet,**
**dass** eine Kühlwasserseite des Getriebeölwärmetauschers (8) in Strömungsrichtung gesehen parallel zum Kühlwasserkühler (6) geschaltet ist.

8. Kühlkreislauf nach einem der Ansprüche 1 bis 6,
**dadurch gekennzeichnet,**
**dass** eine Kühlwasserseite des Getriebeölwärmetauschers (8) in einem Nebenkreislauf (12) mit dem Heizungswärmetauscher (14) und/oder dem Motorölwärmetauscher (16) in Reihe geschaltet ist.
